# EUROPÄISCHE PATENTSCHRIFT

(11) **EP 0 602 204 B1**
(45) Veröffentlichungstag und Bekanntmachung des Hinweises auf die Patenterteilung: **29.01.1997**
(21) Anmeldenummer: 93912541.5
(22) Anmeldetag: 05.07.1993
(51) Int. Cl.: B23Q 3/10, B23Q 1/28, B23Q 1/25

(54) **ZWISCHENELEMENT FÜR EINSPANNVORRICHTUNGEN AUF LOCHRASTERPLATTEN**
ADAPTER FOR USE WITH CLAMPING DEVICES ON MULTI-HOLE MACHINE-TOOL WORKPIECE TABLES
ELEMENT INTERMEDIAIRE POUR DISPOSITIFS DE SERRAGE SUR PLAQUES A MATRICE DE TROUS DE MACHINE-OUTIL

(30) Priorität: 06.07.1992 CH 2114/92
(43) Veröffentlichungstag der Anmeldung: 22.06.1994
(73) Patentinhaber: KISSLIG, Heinz, 8552 Felben-Wellhausen (CH)
(72) Erfinder: KISSLIG, Heinz, 8552 Felben-Wellhausen (CH)
(74) Vertreter: Feldmann, Clarence Paul
(86) Internationale Anmeldenummer: CH9300172
(87) Internationale Veröffentlichungsnummer: WO9401242

(56) Entgegenhaltungen:
- DE-A- 3 232 055
- DE-A- 4 031 914
- DE-C- 3 407 003
- DE-C- 4 004 323
- US-A- 1 397 771
- US-A- 5 026 033

## Beschreibung

Die vorliegende Erfindung betrifft ein Zwischenelement für Einspannvorrichtungen zur Aufspannung von Werkstücken auf Lochrasterplatten von Werkzeugmaschinen gemäss Oberbegriff des Patentanspruches 1, das aus dem Dokument US-A-5 026 033 bekannt ist.

Werkzeugmaschinen, wie zum Beispiel Fräs- oder Bohrmaschinen, sind zum Aufspannen von Werkstücken mit einem Spanntisch ausgerüstet. Früher wiesen diese Spanntische meistens T-Nuten oder Schwalbenschwanznuten auf, in die Spannschrauben (Schraubbolzen) eingeführt wurden. Das zu bearbeitende Werkstück wurde entweder mit diesen Schraubbolzen oder mittels weiteren Spannelementen, wie Spannbriden und Schraubklemmen, befestigt. Diese Form der Spanntische wird vermehrt durch Maschinentische abgelöst, die eine Rasterplatte oder einen Rasterblock besitzen. Beide Varianten weisen in einem definierten Lochrasterabstand Gewindebohrungen auf. Typische Lochrasterabstände sind 50 mm mit einer Genauigkeit von wenigen Mikrometern. Das zu bearbeitende Werkstück lässt sich wie beim früheren System mit Hilfe von Spannelementen befestigen, wobei diese nun mittels Schrauben in den Löchern der Rasterplatte montiert werden.

Es treten oft Situationen auf, bei denen die Lage der vorliegenden Rasterlöcher unbefriedigend ist.
Dies ist der Fall, wenn zum Beispiel das Werkstück so eingespannt werden muss, dass schlechte Kraftübertragungsverhältnisse entstehen. Der Hebelarm zwischen Spannschraube des Spannelementes und Werkstück ist grösser als der Hebelarm des Spannelementes auf der gegenüberliegenden Seite der Spannschraube.
Die Spannkraft wird somit ungünstig auf das Werkstück übertragen. Das Werkstück ist nicht sicher gespannt, die Genauigkeit und die Klemmkraft wird vermindert.
Die vorhandenen Rasterlöcher führen oft dazu, dass das Spannelement einen Teil der Bearbeitungsfläche überdeckt. Das Werkstück muss für die Bearbeitung zweimal eingespannt werden. Dies erhöht den Arbeitsaufwand und somit die Herstellungskosten, zudem muss mit einer grösseren Fertigungstoleranz beim Werkstück gerechnet werden.
In beiden Fällen wird gerade dort ein Gewindeloch benötigt, wo keines vorhanden ist, nämlich zwischen zwei benachbarten Löchern der Lochrasterplatte.

Die vorliegende Erfindung hat es sich daher zur Aufgabe gestellt, eine Vorrichtung zu schaffen, mit der ein Werkstück unabhängig von der Rasterung des Maschinentisches einspannbar ist, und somit die oben erwähnten Nachteile behoben werden.

Um dies zu erreichen wird auf die vorhandene Lochrasterplatte oder auf den Lochrasterblock ein Zwischenelement befestigt. Das Spannelement wird somit nicht mehr auf die Lochrasterplatte oder den Lochrasterblock montiert, sondern auf das Zwischenelement. Es ist nunmehr möglich, das Spannelement, das das Werkstück hält, an jeder beliebigen Position zu fixieren, unabhängig vom Raster des Maschinentisches. Man ist völlig frei, an welcher Position man das Werkstück, in Bezug auf den Maschinentisch und in Bezug auf das Werkstück selber, einspannen möchte. Man kann somit die Spannkraftübertragung vom Spannelement zum Werkstück optimal wählen. Ebenso lässt sich das Werkstück stets so einspannen, dass seine Bearbeitungsflächen nicht durch Spannelemente überdeckt sind. Der Arbeitsgang muss nicht mehr unterbrochen werden, wenn das Werkstück in geänderter Position eingespannt werden muss.

All diese Forderungen erfüllt ein Zwischenelement für Einspannvorrichtungen gemäss der Erfindung mit den Merkmalen des Patentanspruches 1.

Es ist eine zusätzliche Aufgabe der Erfindung, eine Vorrichtung zu schaffen, mit der Werkstücke auf einfache Weise auch in horizontaler Richtung unabhängig von der Rasterung des Maschinentisches gespannt werden können.

Dies wird dadurch erreicht, dass ein Adapterelement, das eine Spannung des Werkstückes in horizontaler Richtung ermöglicht, auf das Zwischenelement befestigbar ist.

Diese Aufgabe löst ein Adapterelement mit den Merkmalen des Patentanspruches 9.

In der Zeichnung ist ein Ausführungsbeispiel des Erfindungsgegenstandes dargestellt und in der nachfolgenden Beschreibung erläutert. Es zeigt:
- Figur 1: eine Explosionsdarstellung des Zwischenelementes für Spannvorrichtungen auf Rasterplatten in der Ansicht von der Seite;
- Figur 2: eine Explosionsdarstellung desselben Zwischenelementes in der Ansicht von vorne;
- Figur 3: das Zwischenelement im zusammengesetztem Zustand in der Ansicht von oben;
- Figur 4: eine Explosionsdarstellung einer weiteren Ausführungsform des Zwischenelementes in der Ansicht von der Seite und
- Figur 5: eine Explosionsdarstellung dieser Ausführungsform in der Ansicht von vorne.

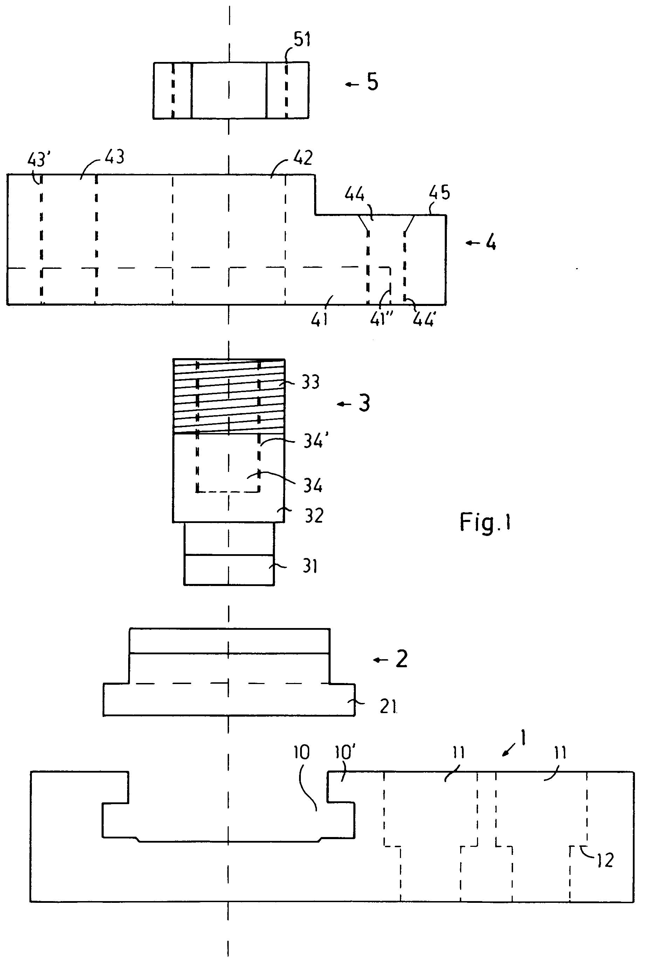

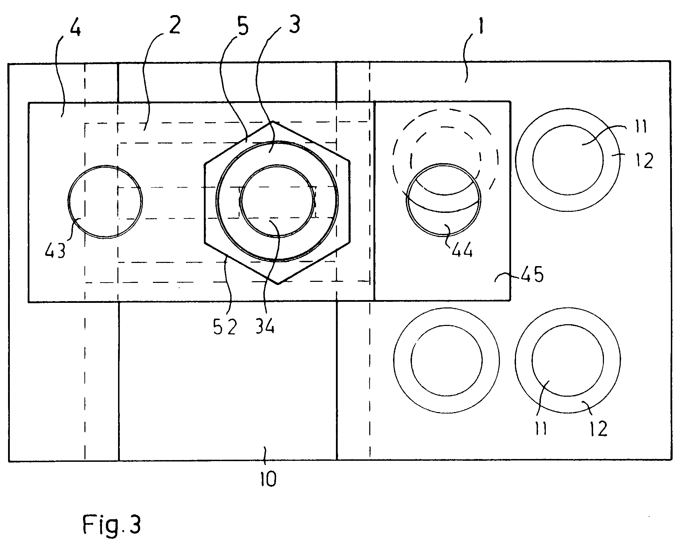

Das Zwischenelement für Einspannvorrichtungen besteht aus mehreren Einzelteilen, die baukastenartig zusammengesetzt werden können. Eine Ausführungsform des erfindungsgemässen Zwischenelementes ist in den Figuren 1,2,3 dargestellt. Das Grundelement ist eine Basisplatte 1, die die Form eines flachen Quaders hat. Sie wird, um das Eigengewicht möglichst klein zu halten, aus harteloxiertem Aluminium hergestellt, wobei aber auch andere, hierfür übliche Materialien in Frage kommen. Die Basisplatte 1 besitzt in der einen Hälfte mindestens vier Bohrungen 11, wobei die Verbindung der Mittelpunkte der Bohrungen 11 ein Rechteck bildet. Die längere Seite des Rechtecks verläuft parallel zur kürzeren Kante der Oberseite der Basisplatte und entspricht dem Lochabstand der Lochrasterplatte oder des Rasterblocks. Die kürzere Seite, die eine Parallele zur längeren Kante der Basisplatte bildet, ist kleiner oder gleich der Hälfte dieses Lochabstandes. Die vier Bohrungen 11 sind durchgehend, weisen aber in ungefähr halber Tiefe einen Absatz 12 auf. Diese Basisplatte 1 wird mit zwei Schraubenbolzen auf die Lochrasterplatte oder an den Lochrasterblock befestigt, wobei sich die zwei Schraubenbolzen in zwei Bohrungen 11 der Basisplatte 1 befinden, die die längere Seite des oben erwähnten Rechtecks bilden. Die Schraubenbolzen stehen auf dem Absatz 12 auf und sind in die Gewindebohrungen der Rasterplatte geschraubt. Die Wahl von den zwei der vier Bohrungen 11 ist von der gewünschten Position des Werkstücks abhängig.
Die Basisplatte weist in ihrer anderen Hälfte eine breite T-Nut 10 auf, die parallel zur kürzeren Kante der Oberseite der Basisplatte verläuft und nach oben geöffnet ist.

In die T-Nut 10 der Basisplatte passt das Querverschiebeelement 2. Sein Fuss formt einen T-Nut-Stein 21, der das Gegenstück zur T-Nut 10 der Basisplatte bildet. Das Querverschiebeelement ist somit parallel zur kürzeren Kante der Basisplatte 1 querverschiebbar. Die Verschiebungsstrecke ist grösser als der Lochabstand der Lochrasterplatte des Maschinentisches. Am Ende der Verschiebungsstrecke sind keine Anschläge vorhanden, das Querverschiebeelement 2 kann auf beiden Seiten in seine Führung hinein- oder aus ihr herausgeschoben werden.
Der obere Teil des Querverschiebeelementes formt wiederum eine T-Nut 20, die um 90° gedreht zum T-Nut-Stein 21 und somit auch zur T-Nut 10 der Basisplatte liegt und nach oben geöffnet ist. Zudem besitzt das Querschiebeelement 2 im oberen Teil auf beiden Seiten eine Stufe, die parallel zur T-Nut 20 verläuft.

Das Gegenstück zur T-Nut 20 des Querverschiebeelementes 2 ist ein Längsverschiebeelement 3. Er besitzt einen Fuss in der Form eines T-Nut-Steines 31, der in die T-Nut 20 des Querverschiebeelementes 2 passt. Das Längsverschiebeelement 3 ist somit parallel zur längeren Kante der Basisplatte 1 entlang dieser Führungsnut längsverschiebbar. Die Anschläge für das Längsverschiebeelement 3 werden auf beiden Seiten der Verschiebungsstrecke durch den Vorsprung 10' der T-Nut 10 der Basisplatte 1 gebildet. Die Verschiebungsstrecke des Längsverschiebeelementes 3 ergibt zusammen mit dem kürzeren Abstand der Bohrungen 11 untereinander mindestens den Abstand zweier benachbarter Rasterlöcher der Lochrasterplatte des Maschinentisches.

Ueber dem Fuss des Längsverschiebeelementes 3 befindet sich ein zylinderförmiger Bolzenkörper 32. Er besitzt auf seinem Umfang ein Arretierungsgewinde 33, das sich von seiner Mitte bis zum oberen Ende erstreckt. Der Bolzenkörper 32 weist eine zentrierte Sacklochbohrung 34 auf. Sie ist nach oben geöffnet, besitzt aber ein Innengewinde 34'.

Als weiteres Baukastenelement ist eine Zwischenplatte 4 vorhanden, die einen reckteckförmigen Grundriss aufweist. Im montierten Zustand liegt sie auf der Basisplatte 1 auf. Sie weist ungefähr zentrisch eine zylindrische Durchführung 42 auf, die einen leicht grösseren Durchmesser besitzt als der Bolzenkörper 32 des Längsverschiebeelementes 3. Im montiertem Zustand ist das Längsverschiebeelement 3 durch diese zylindrische Durchführung 42 der Zwischenplatte 4 geschoben. Das Arretierungsgewinde 33 des Bolzenkörpers 32 ragt über die Zwischenplatte 4 hinaus.
Die Zwischenplatte 4 besitzt auf ihrer Unterseite eine u-förmige Führungsnut 41, die das Gegenstück zu der Stufe 22 des Querverschiebeelementes 2 bildet. Im montierten Zustand umschliesst die Führungsnut 41 die Stufe 22 und bildet so eine weitere Führung, die eine gemeinsame Längsverschiebung von Längsverschiebeelement 3 und Zwischenplatte 4 erlaubt. Die u-förmige Führungsnut 41 ist an einem Ende durch einen Anschlag 41'' abgeschlossen.
Die Zwischenplatte 4 ist auf beiden Seite der zylindrischen Durchführung 42 mit je einer durchgehenden Befestigungsbohrung 43,44 versehen, die ein Innengewinde 43',44' besitzt. Sie können in derselben Ebene angeordnet sein. Die Zwischenplatte 4 kann aber auch wie in dieser Ausführung auf der einen Seite der zylindrischen Durchführung 42 auf ihrer Oberseite einen Absatz 45 aufweisen, in dein sich die eine Befestigungsbohrung 44 befindet. Die zwei Befestigungsbohrungen 43, 44 können gleiche oder verschiedene Durchmesser aufweisen und eventuell angesenkt sein. Diese Befestigungsbohrungen 43,44 übernehmen die Funktion der Bohrungen in der Lochrasterplatte des Maschinentisches, das heisst, sie dienen als Schraublöcher zur Befestigung der Spannelemente, mit denen das Werkstück an der gewünschten Position befestigt wird. Im Gegensatz zu den Rasterlöchern des Maschinentisches ist die Lage dieser Befestigungsbohrungen 43,44 mit Hilfe des Quer- und Längsverschiebeelementes 2,3 bewegbar und die Befestigungsbohrungen können so in eine beliebige Position zwischen den Löchern der Rasterplatte gebracht werden.

Das letzte Baukastenelement dieser Ausführung ist eine Arretierungsmutter 5 mit Aussensechskant 52. Ihr Innengewinde 51 ist das Gegenstück zum Aussengewinde 33 des Längsverschiebeelementes 3. Im montierten Zustand ist die Arretierungsmutter 5 auf das, die Zwischenplatte 4 überragende, Längsverschiebeelement 3 aufgeschraubt und presst so die Zwischenplatte 4 auf die Basisplatte 1. Zugleich wird das Querschiebeelement 2 angehoben und bildet, indem es an die Unterseite des Vorsprungs 10' der T-Nut 10 der Basisplatte 1 gepresst wird, den Gegendruck zur Zwischenplatte. Somit sind die Baukastenelemente 1,2,3,4 des Zwischenelementes für Einspannvorrichtungen auf Lochrasterplatten gegeneinander verspannt und bezüglich der Basisplatte 1 fixiert. Sobald die einzige Arretierungsmutter 5 befestigt ist, ist weder eine Quer- noch eine Längsverschiebung mehr möglich.

In der Beschreibung der oben genannten Ausführungsform wurde gezeigt, dass einzelne Baukastenelemente über T-Nut- und T-Nutstein-Verbindungen miteinander verbunden sind. Dabei ist es unwesentlich, an welchem von je zwei Baukastenelementen, die miteinander in Verbindung stehen, die T-Nut und an welchem der T-Nutstein angeformt ist.
In einer Ausführungsform besitzt somit das Querverschiebeelement auf der oberen Seite einen T-Nutstein und das Längsverschiebeelement weist als Gegenstück die T-Nut auf. In dieser Variante ist auf der oberen Seite des Querverschiebeelementes keine weitere Erhöhung mehr notwendig, die in die U-Nut der Zwischenplatte formschlüssig hineinpasst. Die U-Nut der Zwischenplatte umschliesst in dieser Ausführungsform den Bolzenkörper des Längsverschiebeelementes und somit auch den T-Nutstein des Querverschiebeelementes. Die Längsverschiebbarkeit der Zwischenplatte und des Längsverschiebeelementes ist also auch in dieser Ausführungsform gewährleistet.

Der Aufbau des Zwischenelementes lässt sich einfach variieren. Zum Beispiel wird anstelle der Zwischenplatte 4 ein anderes Baukastenelement in Form einer Lochrasterplatte auf das Querschiebeelement 2 befestigt. Diese Lochrasterplatte kann einen gleichen oder verschiedenen Lochrasterabstand wie die Lochrasterplatte des Maschinentisches aufweisen. Das zu bearbeitende Werkstück wird dann mit den notwendigen Spannelementen auf dieser Lochrasterplatte befestigt.

Eine Variante der Erfindung ist die Verwendung einer zusammengesetzten Zugstange von einer Blockspannbride, die direkt auf das Querverschiebeelement 2 montiert wird und so zusammen mit der Basisplatte 1 zum Einspannen von Werkstücken eingesetzt wird. Dabei übernimmt die Zugstange die Funktion des Längsverschiebeelementes und die Blockspannbride diejenige des zusätzliche Baukastenelementes, nämlich der Zwischenplatte.

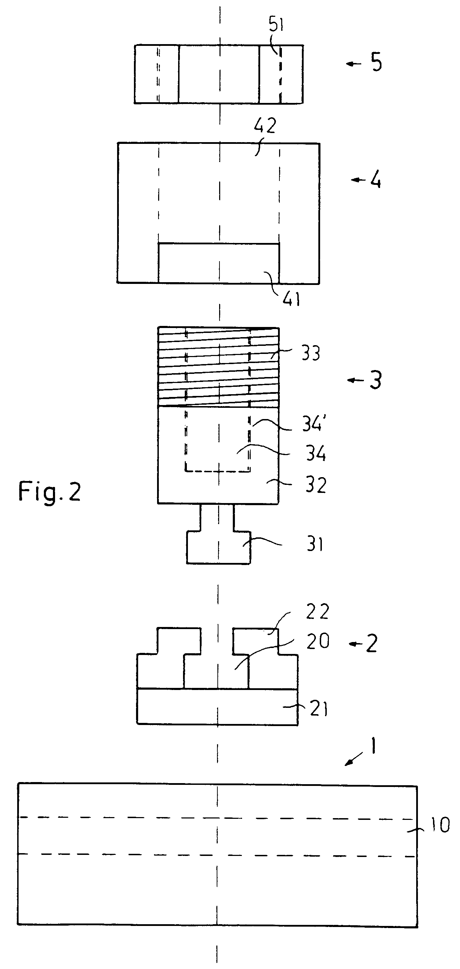

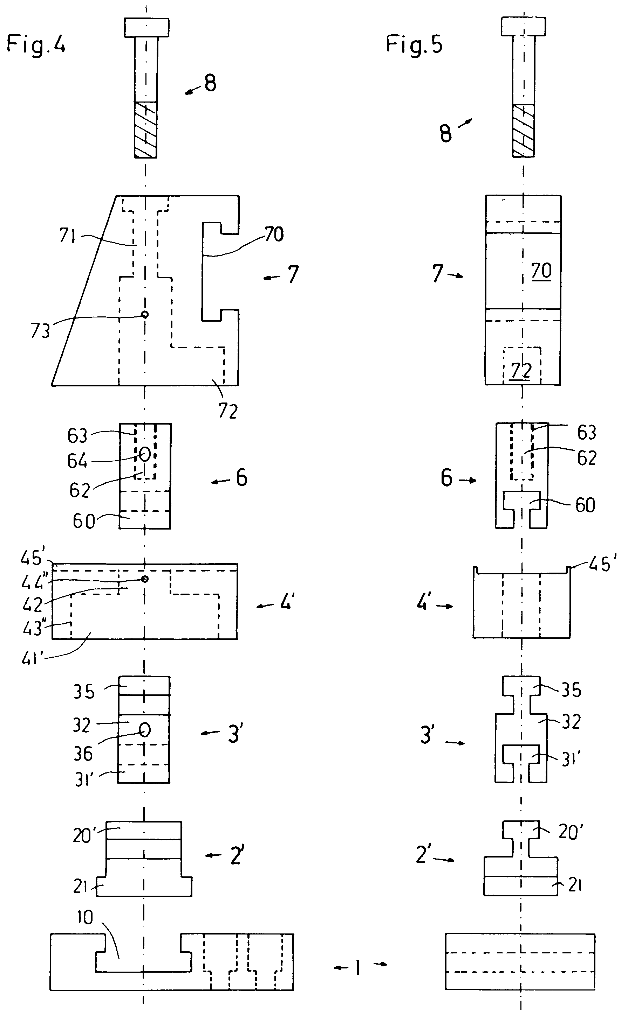

Werkstücke werden nicht nur, wie bisher beschrieben, in vertikaler Richtung eingespannt. Oft ist eine horizontale Spannung erforderlich. Dies wird durch den Aufbau ermöglicht, der in den Figuren 4 und 5 dargestellt ist.
Das dargestellte Zwischenelement weist dieselbe Basisplatte 1 wie die in den Figuren 1 bis 3 beschriebene Ausführung auf. Der untere Teil des Querverschiebeelementes 2' hat ebenfalls dieselbe Form. Der obere Teil besitzt in dieser Ausführungsform einen T-Nutstein 20' oder einen T-Kamm und das Längsverschiebeelement 3' weist die dazu passende T-Nut auf. Das Längsverschiebeelement 3' hat die Form eines Bolzenkörpers 32, dessen oberes Ende zu einem T-Nutstein 35 geformt ist. Die Zwischenplatte 4' weist wie die in den Figuren 1 und 2 dargestellte Platte 4 einen rechteckförmigen Grundriss und eine zylindrische Durchführung 42 zur Aufnahme des Bolzenkörpers 32 auf. Im montierten Zustand ragt der T-Nutstein 35 des Längsverschiebeelementes 3 über die Zwischenplatte 4' hinaus.

Die an der Unterseite der Zwischenplatte 4' befindliche U-Nut 41', die den T-Nutstein 20' des Querverschiebeelementes 2 umfasst, gewährleistet eine gemeinsame Längsverschiebbarkeit von Längsverschiebeelement 3 und Zwischenplatte 4'. Die U-Nut 41' ist an beiden Enden durch Anschläge 43'' abgeschlossen, die die Längsverschiebbarkeit begrenzen. Die Zwischenplatte 4' weist an einer Seite eine durchgehende Bohrung mit Innengewinde 44'' auf. Der Bolzenkörper 32 des Längsverschiebeelementes 3 weist an der entsprechenden Stelle eine Einbuchtung 36 auf, so dass diese zwei Baukastenelemente mit einer seitlich eingeführten Schraube leicht gegeneinander fixierbar sind.
Die obere Ebene der Zwischenplatte 4' ist an ihren Längsseiten, das heisst in Richtung der Längsverschiebung, mit kleinen Erhöhungen 45' versehen, deren Bedeutung weiter unten erläutert wird.

Als weiteres Baukastenelement ist ein Kopplungselement 6 vorhanden. Dieses wird durch einen Bolzenkörper 62 gebildet, der einen Fuss in der Form einer T-Nut 60 besitzt. Diese T-Nut 60 nimmt im montierten Zustand den T-Nutstein 35 des Längsverschiebeelementes 3 auf. Der Bolzenkörper 62 weist am oberen Ende eine Bohrung 62 mit Innengewinde und auf einer Seite eine Einbuchtung 64 auf.

Ein weiteres Baukastenelement ist ein quaderähnliches Adapterelement 7. Dieses weist eine Durchführung 71 auf, deren Durchmesser im unteren Bereich dem Aussendurchmesser des Bolzenkörpers 62 des Kopplungselementes 3 entspricht. Im oberen Bereich entspricht der Durchmesser dem Aussendurchmesser einer weiter unten beschriebenen Schraube 5'. Ebenso wie die Zwischenplatte 4' weist das Adapterelement auf der unteren Seite eine U-Nut 72 auf, die mindestens die Breite des oberen T-Nutsteines 35 des Längsverschiebeelementes 3 besitzt. Auf einer Seitenfläche des Adapterelementes 7 ist eine durchgehende Bohrung 73 mit Innengewinde vorhanden.
Im montierten Zustand liegt das Adapterelement 7 auf der Zwischenplatte 4' auf, wobei es den Bolzenkörper 62 des Kopplungselementes 6 umschliesst. Mittels einer Schraube, die durch das seitliche Gewindeloch 73 in die Einbuchtung 64 eingreift, werden Adapterelement und Kopplungselement leicht gegeneinander fixiert. Die Erhöhungen 45 der Zwischenplatte 4' bilden eine Führung für die mögliche Längsbewegung des Adapterelementes 7.

Die kraftschlüssige Verbindung erfolgt wieder über ein Arretierungsmittel, das in dieser Ausführungsform jedoch durch eine Schraube 8 gebildet wird. Im montierten Zustand durchsetzt diese Schraube 8 die Bohrung 73 des Adapterelementes 7 und greift in das Innengewinde des Kopplungselementes 6. Adapterelement 7 und Zwischenplatte 4' werden auf die Basisplatte 1 gepresst und zugleich wird das Querverschiebeelement 2 angehoben, so dass, wie bereit oben beschrieben, ein Gegendruck entsteht. Somit sind nun alle erwähnten Baukastenelemente gegeneinander verspannt und bezüglich der Basisplatte 1 miteinander fixiert.

Das Adapterelement 7 ist notwendig, damit nun ein zu bearbeitendes Werkstück in horizontaler Richtung eingespannt werden kann. Das Adapterelement 7 weist hierfür eine T-Nut 70 auf, die senkrecht zu der durch die Basisplatte 1 definierten Ebene liegt. In diese T-Nut wird wieder ein, hier nicht dargestelltes, Querverschiebeelement 2 und die weiteren für die Einspannung notwendigen und weiter oben beschriebenen Baukastenelemente montiert. Die T-Nut 70 weist bevorzugterweise dieselben Abmessungen wie die T-Nut 10 der Basisplatte 1 auf. Dadurch können dieselben Baukastenelemente wie für die vertikale Spannung verwendet werden. Das Adapterelement ermöglicht also auf einfache Art eine Umlenkung der Spannbarkeit von der vertikalen zur horizontalen Richtung.

Die Erfindung erlaubt eine Vielfalt weiterer Variationsmöglichkeiten. Als Grundelemente werden stets die Basisplatte 1 und das Querverschiebelement 2 benötigt. Die obere Hälfte des Querschiebeelements 2 muss eine Führung, z.B. T-Nut-Führung, aufweisen, die um 90° zum T-Nut-Stein 21 gedreht ist. Das weitere Baukastenelement, das nun je nach Anwendung gewählt werden kann, muss als Fuss das Gegenstück zur Führung des Querschiebeelementes aufweisen.

Ebenso ist es möglich, das Zwischenelement anstatt auf eine Lochrasterplatte mittels Befestigungselementen an einer Platte mit T-Nut zu befestigen. Das Zwischenelement dient auch hier zur Einspannung von Werkstücken an beliebig wählbaren Stellen.

## Patentansprüche

1. Zwischenelement für Einspannvorrichtungen zur Aufspannung von Werkstücken auf einer Lochrasterplatte oder einem Lochrasterblock, wobei es aus mehreren, baukastenartigen Elementen besteht, wovon das im Benutzungszustand unterste Element eine Basisplatte (1) ist, mit mindestens zwei Bohrungen (11) im Abstand der Rasterung der Lochrasterplatte zur schraubbaren Befestigung der Basisplatte (1) auf der Lochrasterplatte, und einer ersten T-Nut (10), die zur Aufnahme eines Querverschiebeelementes (2) dient, in das eine zweite, senkrecht zur ersten T-Nut (10) verlaufende T-Nut (20) angeordnet ist, die zur Aufnahme eines Längsverschiebeelementes (3) mit einem Fuss (31) in der Form eines T-Nutsteines dient,
dadurch gekennzeichnet,
dass mindestens ein weiteres Baukastenelement (4) vorhanden ist, welches auf der Basisplatte (1) aufliegt und eine zylindrische Durchführung aufweist,
dass das Längsverschiebeelement (3) ein Bolzenkörper (32) ist, dessen Aussendurchmesser der zylindrischen Durchführung des weiteren Baukastenelementes (4) entspricht und diese durchsetzt,
dass ferner ein Arretierungsmittel (5, 8) vorhanden ist, das in Wirkverbindung mit dem Bolzenkörper (32) bringbar ist und mittels dem die Basisplatte (1), das Querverschiebeelement (2), das Längsverschiebeelement (3) und das weitere Bauelement (4) in verschiedenen Verschiebelagen unter Zugspannung kraftschlüssig zueinander arretierbar sind, wobei das Arretierungsmittel (5, 8) und das Querverschiebeelement (2,2') die für Arretierung notwendigen Gegendruckflächen bilden.

2. Zwischenelement nach Anspruch 1, dadurch gekennzeichnet, dass das Längsverschiebeelement (3) von einer Zugstange einer Blockspannbride, die das weitere Baukastenelement (4) darstellt, gebildet ist, wobei das Arretierungsmittel eine Arretierungsmutter (5) ist, die auf die mehrteilige Zugstange aufgesetzt ist und diese mit der Basisplatte (1) und dem Querverschiebeelement (2) unter Zugspannung kraftschlüssig verbindet.

3. Zwischenelement nach Anspruch 1, dadurch gekennzeichnet, dass das weitere Baukastenelement eine Zwischenplatte (4) ist

4. Zwischenelement nach Anspruch 3, dadurch gekennzeichnet, dass das Querverschiebeelement (2) beidseitig der T-Nut je eine Stufe (22) hat, die eine Erhöhung definiert und dass an der Unterseite der Zwischenplatte (4) eine längsverlaufende U-Nut (41) zur Führung vorgesehen ist, in die die erwähnte Erhöhung formschlüssig hineinpasst.

5. Zwischenelement nach Anspruch 4, dadurch gekennzeichnet, dass die U-Nut (41) mindestens einseitig einen Anschlag (41'') aufweist.

6. Zwischenelement nach Anspruch 3, dadurch gekennzeichnet, dass der Bolzenkörper an seinem oberen Ende mit einem Arretierungsgewinde (33) versehen ist, auf das als Arretierungsmittel eine Mutter (5) aufschraubbar ist, die auf der Zwischenplatte (4) anliegt.

7. Zwischenelement nach Anspruch 1, dadurch gekennzeichnet, dass das Längsverschiebeelement (3) im Bolzenkörper (32) ein zentrisches Gewindesackloch (34) zur Befestigung einer Aufspannvorrichtung aufweist.

8. Zwischenelement nach Anspruch 1, dadurch gekennzeichnet, dass das Arretierungsmittel eine Schraube (8) ist,
dass der Bolzenkörper (32) des Längsverschiebeelementes (3) an seinem oberen Ende einen T-Nutstein (35) aufweist,
dass ein Kopplungselement (6) vorhanden ist, das die Form eines Bolzenkörper (62) aufweist, dessen Fuss die Form einer T-Nut (60) hat, in die der T-Nutstein (35) des Längsverschiebeelementes aufnehmbar ist, und der an seinem oberen Ende ein Gewindeloch zur Aufnahme der Schraube aufweist und
dass ein zusätzliches Baukastenelement (7) vorhanden ist, welches auf der Zwischenplatte (4) aufliegt und eine Durchführung aufweist, deren Durchmesser im unteren Bereich dem Aussendurchmesser des Bolzenkörpers (62) und im oberen Bereich dem Aussendurchmesser der Schraube (8) entspricht, so dass das zusätzliche Baukastenelement (7) und die übrigen, genannten Baukastenelementen mittels der Schraube (8) in verschiedenen Verschiebelagen kraftschlüssig zueinander miteinander verbindbar sind.

9. Zwischenelement nach Anspruch 3, dadurch gekennzeichnet, dass ein Adapterelement (7) auf der Zwischenplatte (4) befestigbar ist, wobei das Adapterelement (7) eine T-Nut (70) aufweist, die senkrecht zu der durch die Basisplatte (1) definierten Ebene liegt und die zur Aufnahme eines Querverschiebeelementes (2) dient, so dass das Werkstück horizontal einspannbar ist.

10. Zwischenelement nach den Ansprüchen 8 und 9, dadurch gekennzeichnet, dass das Adapterelement (7) das zusätzliche Baukastenelement ist.

11. Zwischenelement nach Anspruch 3, dadurch gekennzeichnet, dass die Zwischenplatte (4) als Träger für daran befestigbare Aufspannvorrichtungen dient und hierzu verwendbare Befestigungsbohrungen (43,44) hat.

12. Zwischenelement nach Anspruch 1, dadurch gekennzeichnet, dass die Basisplatte (1) mindestens vier Bohrungen (11) aufweist, wobei je zwei Bohrungen, die jeweils paarweise parallel zur ersten T-Nut (10) liegen, den Abstand der Rasterung der Lochrasterplatte haben, während der Abstand zwischen den beiden Bohrungspaaren senkrecht zur ersten T-Nut (10) mindestens annähernd den halben Lochrasterabstand hat.

13. Zwischenelement nach Anspruch 8, dadurch gekennzeichnet, dass der Verschiebeweg des Querverschiebeelementes (2) mindestens annähernd dem Abstand zweier Bohrungen (11) eines Bohrungspaares entspricht, während der Verschiebeweg im Querverschiebeelement (2) der Länge und Richtung der zweiten T-Nut (20) und mindestens annähernd dem Abstand zwischen den beiden Bohrungspaaren entspricht.

14. Zwischenelement nach Anspruch 1, dadurch gekennzeichnet, dass die erste T-Nut (10) der Basisplatte (1) seitlich zu den Bohrungen (11) versetzt ist.

## Claims

1. Intermediate element for chucking devices for clamping workpieces to a plate or block provided with a grid of holes, consisting of several modular elements, the undermost element in the use state being a base plate (1) with at least two holes (11) the same distance apart as the holes of the grid of the chucking plate, which two holes are used for the screw fixing of the base plate (1) to the grid plate, and with a first T-slot (10) to receive a cross-sliding element (2), in which element a second T-slot (20) perpendicular to the first T-slot (10) is arranged, which second T-slot receives a longitudinally-sliding element (3) with a foot (31) in the form of a sliding block engaging in the T-slot, characterised in that at least one further modular element (4) is supported on the base plate (1) and has a cylindrical bore, in that the longitudinally-sliding element (3) is a pin (32) the external diameter of which corresponds to the diameter of the cylindrical bore in the further modular element (4) and passes through it, and in that a stop means (5, 8) is provided, which can be made to interact with the pin (32) and by means of which the base plate (1), the cross-sliding element (2), the longitudinally-sliding element (3) and the further modular element (4) can be arrested in different positions in relation to each other non-positively under tensile stress, the arresting means (5, 8) and the cross-sliding element (2,2') forming the counter-pressure surfaces necessary for the arresting effect.

2. Intermediate element according to Claim 1, characterised in that the longitudinally sliding element (3) is formed by a pull-bar of a block-tensioning strap which forms the further modular element (4), the arresting means being a stop-nut (5) which is fitted to the multi-part pull-bar and connects this bar non-positively to the base plate (1) and to the cross-sliding element (2) under tensile stress.

3. Intermediate element according to Claim 1, characterised in that the further modular element is an intermediate plate (4).

4. Intermediate element according to Claim 3, characterised in that the cross-sliding element (2) has a step (22) on each side of the T-slot, which step defines an elevation, and in that the underside of intermediate plate (4) is provided with a longitudinal U-slot (41) for guidance, in which slot the above-mentioned elevation fits positively.

5. Intermediate element according to Claim 4, characterised in that the U-slot (41) has a stop (41'') on at least one side.

6. Intermediate element according to Claim 3, characterised in that the pin is provided with an arresting thread (33) at its upper end, on to which thread a nut (5) can be screwed as an arresting means which abuts on the intermediate plate (4).

7. Intermediate element according to Claim 1, characterised in that the longitudinally sliding element (3) has a central blind threaded hole (34) in the pin (32) for mounting a clamping device.

8. Intermediate element according to Claim 1, characterised in that the arresting means is a screw (8), in that the pin (32) of the longitudinally-sliding element (3) has a sliding block (35) to engage in a T-slot, and in that a coupling element (6) is provided which has the form of a pin (62) the foot of which has the form of a T-slot (60) in which the sliding block (35) of the longitudinally sliding element can engage, and which has a threaded hole to receive the screw at its upper end, and in that an additional modular element (7) is provided, which abuts on the intermediate plate (4) and has a bore the diameter of the lower part of which corresponds to the external diameter of the pin (62), while the diameter of its upper part corresponds to the external diameter of the screw (8), so that the additional modular element (7) and the other modular elements which have been mentioned can be connected non-positively in various sliding positions by means of the screw (8).

9. Intermediate element according to Claim 3, characterised in that an adapter element (7) can be mounted on the intermediate plate (4), the adapter element (7) having a T-slot (70) perpendicular to the plane defined by the base plate (1) and which receives a cross-sliding element (2), so that the workpiece can be clamped in position horizontally.

10. Intermediate element according to Claims 8 and 9, characterised in that the adaptor element (7) is the additional modular element.

11. Intermediate element according to Claim 3, characterised in that the intermediate plate (4) is used as a carrier for clamping devices fixed to it and has fixing holes (43, 44) for this purpose.

12. Intermediate element according to Claim 1, characterised in that the base plate (1) has at least four holes (11), of which each pair of holes, located parallel to the first T-slot (10), have the same spacing as the holes of the grid plate, while the distance between the two pairs of holes perpendicular to the first T-slot (10) is at least approximately half that between the holes of the grid.

13. Intermediate element according to Claim 8, characterised in that the sliding path of the cross-sliding element (2) at least approximately equals the distance between two holes (11) of a pair of holes, while the sliding path in the cross-sliding element (2) corresponds to the length and direction of the second T-slot (20) and is at least approximately equal to the distance between the two pairs of holes.

14. Intermediate element according to Claim 1, characterised in that the first T-slot (10) of the base plate (1) is offset to the side of the holes (11).

## Revendications

1. Elément intermédiaire pour des dispositifs de serrage destinés à serrer des pièces sur une plaque à matrice de trous ou sur un bloc à matrice de trous, lequel est constitué par plusieurs éléments démontables parmi lesquels l'élément qui est à la partie inférieure dans l'état d'utilisation est une plaque de base (1) comprenant au moins deux perçages (11) dont la distance est égale au module de la plaque à matrice de trous en vue de fixer par vissage la plaque de base (1) sur la plaque à matrice de trous, ainsi qu'une première rainure en T (10) qui sert à recevoir un élément de coulissement transversal (2) dans lequel est ménagée une deuxième rainure en T (20) qui s'étend perpendiculairement à la première rainure en T (10) et qui sert à recevoir un élément de coulissement longitudinal (3) par un socle (31) présentant la forme d'un coulisseau pour rainure en T, caractérisé :
- par le fait qu'il est prévu au moins un autre élément démontable (4) qui porte sur la plaque de base (1) et qui présente un passage cylindrique,
- par le fait que l'élément de coulissement longitudinal (3) est un corps de boulon (32) dont le diamètre extérieur correspond au passage cylindrique de l'autre élément démontable (4) et qui traverse celui-ci,
- par le fait qu'il est prévu en outre un moyen de blocage (5, 8) qui peut être amené en liaison fonctionnelle avec le corps de boulon (32) et au moyen duquel la plaque de base (1), l'élément de coulissement transversal (2), l'élément de coulissement longitudinal (3) et l'autre élément démontable (4) peuvent être bloqués entre eux dans diverses positions de coulissement par conjugaison des forces et sous une contrainte de traction, le moyen de blocage (5, 8) et l'élément de coulissement transversal (2, 2') constituant les surfaces de serrage conjuguées qui sont nécessaires pour le blocage.

2. Elément intermédiaire selon la revendication 1, caractérisé par le fait que l'élément de coulissement longitudinal (3) est constitué par une tige de traction d'une bride de serrage du bloc qui représente l'autre élément démontable (4), cependant que le moyen de blocage est un écrou de blocage (5) qui est passé sur la tige de traction en plusieurs parties et qui relie celle-ci à la plaque de base (1) et à l'élément de coulissement transversal (2) par conjugaison des forces et sous une contrainte de traction.

3. Elément intermédiaire selon la revendication 1, caractérisé par le fait que l'autre élément démontable est une plaque intermédiaire (4).

4. Elément intermédiaire selon la revendication 3, caractérisé par le fait que l'élément de coulissement transversal (2) présente un gradin (22) qui définit une surélévation sur chacun des deux côtés de la rainure en T, et par le fait qu'il est prévu pour le guidage, sur le côté inférieur de la plaque intermédiaire (4), une rainure en U (41) qui s'étend longitudinalement et dans laquelle la surélévation précitée s'ajuste par conjugaison des formes.

5. Elément intermédiaire selon la revendication 4, caractérisé par le fait que la rainure en U (41) présente une butée (41''), du moins d'un côté.

6. Elément intermédiaire selon la revendication 3, caractérisé par le fait que le corps de boulon est pourvu a son extrémité supérieure d'un filetage de blocage (33) sur lequel un écrou (5) qui porte sur la plaque intermédiaire (4) peut être vissé pour servir de moyen de blocage.

7. Elément intermédiaire selon la revendication 1, caractérisé par le fait que l'élément de coulissement longitudinal (3) présente dans le corps de boulon (32) un trou borgne fileté central (34) pour fixer un dispositif de serrage.

8. Elément intermédiaire selon la revendication 1, caractérisé :
- par le fait que le moyen de blocage est une vis (8),
- par le fait que le corps de boulon (32) de l'élément de coulissement longitudinal (3) présente un coulisseau pour rainure en T (35) à son extrémité supérieure,
- par le fait qu'il est prévu un élément d'accouplement (6) présentant la forme d'un corps de boulon (62) dont le socle présente la forme d'une rainure en T (60), le coulisseau pour rainure en T (35) de l'élément de coulissement longitudinal pouvant être reçu dans celle-ci, et qui présente à son extrémité supérieure un trou fileté destiné a recevoir la vis, et :
- par le fait qu'il est prévu un élément démontable supplémentaire (7) qui porte sur la plaque intermédiaire (4) et qui présente un passage dont le diamètre correspond au diamètre extérieur du corps de boulon (62) dans sa région inférieure et au diamètre extérieur de la vis (8) dans sa région supérieure, de sorte qu'au moyen de la vis (8), l'élément démontable supplémentaire (7) et les autres éléments démontables précités peuvent être reliés entre eux par conjugaison des forces dans diverses positions de coulissement.

9. Elément intermédiaire selon la revendication 3, caractérisé par le fait qu'un élément adaptateur (7) peut être fixé sur la plaque intermédiaire (4), cependant que l'élément adaptateur (7) présente une rainure en T (70) qui est située perpendiculairement au plan défini par la plaque de base (1) et qui sert à recevoir un élément de coulissement transversal (2), de sorte que la pièce peut être serrée horizontalement.

10. Elément intermédiaire selon les revendications 8 et 9, caractérisé par le fait que l'élément adaptateur (7) constitue l'élément démontable supplémentaire.

11. Elément intermédiaire selon la revendication 3, caractérisé par le fait que la plaque intermédiaire (4) sert de support à des dispositifs de serrage qui peuvent être fixés sur elle, et qu'elle comporte des perçages de fixation (43, 44) qui peuvent être utilisés à cette fin.

12. Elément intermédiaire selon la revendication 1, caractérisé par le fait que la plaque de base (1) présente au moins quatre perçages (11), cependant que deux perçages qui sont situés à chaque fois en formant une paire parallèlement à la première rainure en T (10) présentent à chaque fois une distance égale au module de la plaque à matrice de trous, tandis que la distance entre les deux paires de perçages perpendiculairement à la première rainure en T (10) est égale à la moitié du module de la matrice de trous, du moins approximativement.

13. Elément intermédiaire selon la revendication 8, caractérisé par le fait que le trajet de coulissement de l'élément de coulissement transversal (2) correspond, du moins approximativement, à la distance entre deux perçages (11) d'une paire de perçages, tandis que le trajet de coulissement dans l'élément de coulissement transversal (2) correspond à la longueur et à la direction de la deuxième rainure en T (20) et, du moins approximativement, à la distance entre les deux paires de perçages.

14. Elément intermédiaire selon la revendication 1, caractérisé par le fait que la première rainure en T (10) de la plaque de base (1) est décalée latéralement par rapport aux perçages (11).
